# EUROPÄISCHE PATENTSCHRIFT

(11) **EP 1 147 277 B1**
(45) Veröffentlichungstag und Bekanntmachung des Hinweises auf die Patenterteilung: **20.06.2007**
(21) Anmeldenummer: 00902581.8
(22) Anmeldetag: 12.01.2000
(51) Int. Cl.: E05B 49/00, E05B 13/00

(54) **SCHLÜSSELLOSE ZUGANGSKONTROLLEINRICHTUNG FÜR KRAFTFAHRZEUGE**
KEYLESS ACCESS CONTROL DEVICE FOR MOTOR VEHICLES
DISPOSITIF DE CONTROLE D'ACCES SANS CLE POUR DES VEHICULES AUTOMOBILES

(30) Priorität: 25.01.1999 DE 19902792
(43) Veröffentlichungstag der Anmeldung: 24.10.2001
(73) Patentinhaber: Leopold Kostal GmbH & Co. KG, 58769 Lüdenscheid (DE)
(72) Erfinder: MINDL, Anton, D-58515 Lüdenscheid (DE); KERKMANN, Detlef, D-58769 Nachrodt (DE)
(86) Internationale Anmeldenummer: PCT/EP2000/000157
(87) Internationale Veröffentlichungsnummer: WO 2000/043621

(56) Entgegenhaltungen:
- EP-A- 0 218 251
- DE-A- 3 313 100
- DE-A- 4 342 467
- DE-C- 19 728 761
- FR-A- 2 749 873

## Beschreibung

Die Erfindung bezieht sich auf das Gebiet schlüsselloser Zugangskontrolleinrichtungen. Insbesondere betrifft die Erfindung eine schlüssellose Zugangskontrolleinrichtung für Kraftfahrzeuge mit einer dem Kraftfahrzeug zugeordneten Sende-Empfangseinrichtung und mit einem mobilen Transponder, wobei die Sende-Empfangseinrichtung und der Transponder untereinander Codesignale zur Durchführung eines die Zugangsberechtigung überprüfenden, bidirektionalen Frage-Antwort -Dialogs austauschen, und wobei eine Steuervorrichtung vorhanden ist, die mit zumindest einem durch zumindest ein dem Kraftfahrzeug zugeordnetes Bedienelement beeinflußten, elektrischen Schalter kooperiert.

Eine derartige Vorrichtung ist aus den Aufsätzen "Ein Fahrzeugsicherungssystem ohne mechanischen Schlüssel" von Ch. Schneider und U. Schrey, erschienen in: "Automobiltechnische Zeitschrift 96" (1994) Nr. 5 sowie "Smart-Card - Abschied vom Autoschlüssel" von U. Schrey, Ch. Schneider und M. Siedentrop, erschienen in: "Siemens-Zeitschrift 1/96" bekannt. Die in diesen Dokumenten beschriebene Zugangskontrolleinrichtung besteht im wesentlichen aus einer dem Kraftfahrzeug zugeordneten Sende-Empfangseinrichtung und aus einem mobilen Transponder. Die Sende-Empfangseinrichtung umfaßt drei im induktiven Frequenzbereich arbeitende Sender (NF-Sender), von denen jeweils einer der Fahrertür, ein weiterer der Beifahrertür und der dritte dem Fahrzeugheck zugeordnet sind. Die Sendeantennen der NF-Sender sind in die jeweiligen Seitentüren bzw. in die hintere Stoßstange integriert. Jeder NF-Sender ist mit dem der jeweiligen Tür zugeordneten Türgriff bzw. Kofferraumtaste dergestalt verbunden, daß beim Betätigen eines solchen der diesem Fahrzeugbereich zugeordnete NF-Sender ein niederfrequentes Codesignal (NF-Signal) aussendet. Die übrigen NF-Sender verbleiben dagegen ruhig und senden keine NF-Signale aus.

Die dem Kraftfahrzeug zugeordnete Sende-Empfangseinrichtung ist ferner mit einem HF-Empfänger zum Empfangen eines HF-Signals des Transponders ausgerüstet. Das in dem HF-Empfänger empfangene Antwortsignal des Transponders beaufschlagt ein mit einem Prozessor ausgestattetes Steuergerät, in welchem das empfangene Antwortsignal, welches als Kryptocode empfangen worden ist, entschlüsselt und auf seine Gültigkeit hin überprüft wird. Wird eine Übereinstimmung festgestellt, wird ein entsprechendes Steuersignal an den jeweiligen Türverriegelungsmechanismus zum Entriegeln derjenigen Türe gegeben, deren Türgriff zuvor betätigt worden ist.

Als Transponder ist eine sogenannte Zugangskarte mit einem NF-Empfänger und einem HF-Sender kleiner Leistung vorgesehen. Die induktive Empfangsantenne ist als Rahmenantenne, die hochfrequent strahlende Sendeantenne als Leiterplattenantenne ausgeführt. Das von dem NF-Empfänger des Transponders empfangene NF-Signal wird in dem Transponder decodiert. Anschließend verrechnet ein dem Transponder zugeordneter Mikroprozessor das in dem NF-Signal enthaltene Codewort mit einem Sicherheitsalgorithmus und sendet das Ergebnis mittels der HF-SendeEinheit an den HF-Empfänger der dem Kraftfahrzeug zugeordneten Sende-Empfangseinrichtung. Durch die Versendung von NF-Signalen zum "Wecken" des Transponders ist durch das rasch abnehmende magnetische Feld eine Funktionsradiusbegrenzung vorgegeben. Ein Empfang des ausgesendeten NF-Signals ist lediglich innerhalb eines Funktionsradius von 1,5 bis 2 Metern möglich. Dadurch wird gewährleistet, daß nur diejenigen Transponder von dem betätigten NF-Sender geweckt werden, die sich tatsächlich in diesem Nahfeld befinden. Durch die notwendige Betätigung eines Türgriffes bzw. einer Kofferraumtaste und der Begrenzung des Funktionsradiusses erfolgt eine eindeutige Lokalisierung des Transponders bzw. der den Transponder tragenden Person.

Zum Ermöglichen eines möglichst raschen Entriegelns der jeweiligen Kraftfahrzeugtür werden modifizierte Türgriff- und Schloßmechaniken eingesetzt, die ein sofortiges Aufspringen des Einstieges, an welchem der Griff gezogen wurde, ermöglichen. Selbst durch Vorsehen derartiger Mechaniken ist es nicht möglich, diejenige Zeit, welche die zum Transport der vom NF-Sender zum Transponder übersandten Daten benötigen, abzukürzen. Dies gilt insbesondere wenn auf dieser Niederfrequenzstrecke kompliziert aufgebaute Kryptocodes übermittelt werden sollen, da ein solches Vorgehen aufgrund der geringen Datenübertragungsgeschwindigkeit eine gewisse Zeitdauer in Anspruch nimmt. Das Übermitteln des decodierten Antwortsignals des Transponders an den HF-Empfänger verzögert den Beginn der Türentriegelung dagegen nur geringfügig.

Eine weitere schlüssellose Zugangskontrolleinrichtung für Fahrzeuge ist aus der DE 43 29 697 C2 bekannt. Diese Vorrichtung verwendet einen zentralen NF-Sender zum Aussenden des niederfrequenten Codesignals. Bei dieser Vorrichtung ist jedoch vorgesehen, daß der NF-Sender zyklisch in gewissen Zeitabständen NF-Signale aussendet. Nur wenn sich der dem Kraftfahrzeug zugeordnete Transponder in dem Funktionsradius des NF-Senders befindet, wird dieser geweckt und sendet sein Antwortsignal zurück. Bei dieser Vorrichtung ist es zum Auslösen des Entriegelungsmechanismus nicht notwendig, einen Türgriff oder eine Kofferraumtaste betätigen zu müssen. Da eine Lokalisierung des Transponders zum Entriegeln lediglich bestimmter Türen gemäß dieser Vorrichtung nicht möglich ist, eignet sich diese Zugangskontrolleinrichtung allein für Kraftfahrzeuge mit einer Zentralverriegelung. Auch bei dieser vorbekannten Zugangskontrolleinrichtung erfolgt mitunter eine zeitversetzte Entriegelung bedingt durch die Übertragungsdauer des unter Umständen kompliziert aufgebauten NF-Signals.

Ferner ist eine schlüssellose Zugangskontrolleinrichtung in der DE 197 28 761 C1 beschrieben, bei der wiederum mehrere NF-Sender eingesetzt sind, die jeweils bestimmten Fahrzeugbereichen zugeordnet sind und jeweils ein sich von den anderen NF-Sendern unterscheidendes Signal aussenden. Der mobile Transponder, der sowohl einen NF-Empfänger als auch eine HF-Sende-Empfangseinheit umfaßt, wird durch einen der NF-Sender geweckt und tritt daraufhin in einen die Zugangsberechtigung überprüfenden Frage -Antwort-Dialog mit der dem Kfz zugeordneten Sende-Empfangs-Einrichtung ein, der nach erfolgreicher Abwicklung zum Entriegeln der entsprechenden Fahrzeugtür führt.

Dem hierbei erzielten Vorteil, daß keine Betätigung eines Türgriffs erforderlich ist, um die Kommunikation zwischen Fahrzeug und Transponder zu starten, und daß somit keine merkliche Verzögerung zwischen Betätigung des Griffs und Entriegelung der Tür auftritt, steht bei dieser Einrichtung der Nachteil entgegen, daß beim Aufenthalt des berechtigten Nutzers in der Nähe des Fahrzeugs eine unbeabsichtigte Entriegelung der Tür(en) erfolgen kann.

Durch die FR 2 749 873 A ist ein System zum Öffnen von Fahrzeugtüren bekannt geworden, bei dem statt eines Innen- und eines Außengriffes zur mechanischen Betätigung des Schlosses nur ein Innengriff vorhanden ist. Die Öffnung der Tür von außen wird dadurch ermöglicht, daß durch Betätigung eines tragbaren Senders zur Fernentriegelung neben der Entriegelung des Türschlosses auch eine Absenkung der Fensterscheibe bewirkt wird, wodurch der Innengriff auch von der Außenseite her zugänglich ist.

Ausgehend von dem eingangs diskutierten Stand der Technik liegt der Erfindung daher die Aufgabe zugrunde, eine schlüssellose Zugangskontrolleinrichtung für Kraftfahrzeuge sowie ein Verfahren zum Durchführen einer schlüssellosen Zugangsberechtigungskontrolle bei Kraftfahrzeugen vorzuschlagen, die nicht nur zum Entriegeln einzelner Türen oder Klappen geeignet ist, wobei auch ein Austausch kompliziert aufgebauter Code- und Antwortsignale ohne eine spürbare Verzögerung des Entriegelungsvorganges möglich ist, sondern bei der auch eine unbeabsichtigte Entriegelung der Fahrzeugtüren wirksam verhindert ist.

Diese Aufgabe wird dadurch gelöst, daß das zumindest eine Bedienelement bis zum Empfang einer ersten, eine Grobidentifikation des berechtigten Benutzers beinhaltenden Codenachricht durch eine bewegliche, mechanische Abdeckung gegen Betätigung geschützt ist, und daß der die Zugangsberechtigung überprüfende, bidirektionale Frage-Antwort-Dialog durch Betätigung des freigegebenen Bedienelements ausgelöst ist.

Ein vom Fahrzeug ausgesandtes, erstes Codesignal dient lediglich dem sog. "Wecken" des Transponders bei der Annäherung des berechtigten Benutzers an sein Kfz. Das daraufhin von der Sende-Empfangs-Einheit des Transponders ausgesandte, erste codierte Antwortsignal dient einer vorläufigen, mit einem relativ geringen Sicherheitsbedarf versehenen Verifikation der Nutzungsberechtigung, die zu einer Öffnung der bis dahin die Bedienelemente verbergenden Abdeckungen führt.
Erst die Betätigung eines dieser Bedienelemente löst den eigentlichen, mit einem hohen Sicherheitsstandard durchzuführenden Frage-Antwort-Dialog zwischen der dem Kraftfahrzeug zugeordneten Sende-Empfangseinrichtung und dem Transponder aus.
Dadurch, daß dieser Frage-Antwort-Dialog nur dann stattfindet, wenn der durch die vorgeschaltete Grobverifikation als mutmaßlich berechtigt identifizierte Benutzer durch die Betätigung eines Türgriffs seinen Wunsch, das Fahrzeug zu öffnen, bekundet hat, wird die Systemsicherheit maßgeblich erhöht. Durch die Aktion des Benutzers wird gleichzeitig auch die zu öffnende Tür identifiziert, sofern nicht ohnehin eine andere Entriegelung - z.B. im Sinne einer zentralen Entriegelung - gewünscht ist.

Dabei ist vorteilhaft vorgesehen, daß die Bedienelemente durch die Türgriffe des Kraftfahrzeugs gebildet sind.

Vorteilhaft ist außerdem vorgesehen, daß zum Öffnen und Schließen der mechanischen Abdeckung des zumindest einen Bedienelements elektromotorische Antriebsmittel eingesetzt sind.

Weitere Vorteile der Erfindung ergeben sich aus den übrigen Unteransprüchen sowie aus der nachfolgenden Beschreibung eines bevorzugten Ausführungsbeispieles. Es zeigen:
- Fig. 1:: eine schematisierte Darstellung einer schlüssellosen Zugangskontrolleinrichtung für Kraftfahrzeuge,
- Fig. 2:: eine mögliche Realisierung der mechanischen Abdeckung eines Türgriffs

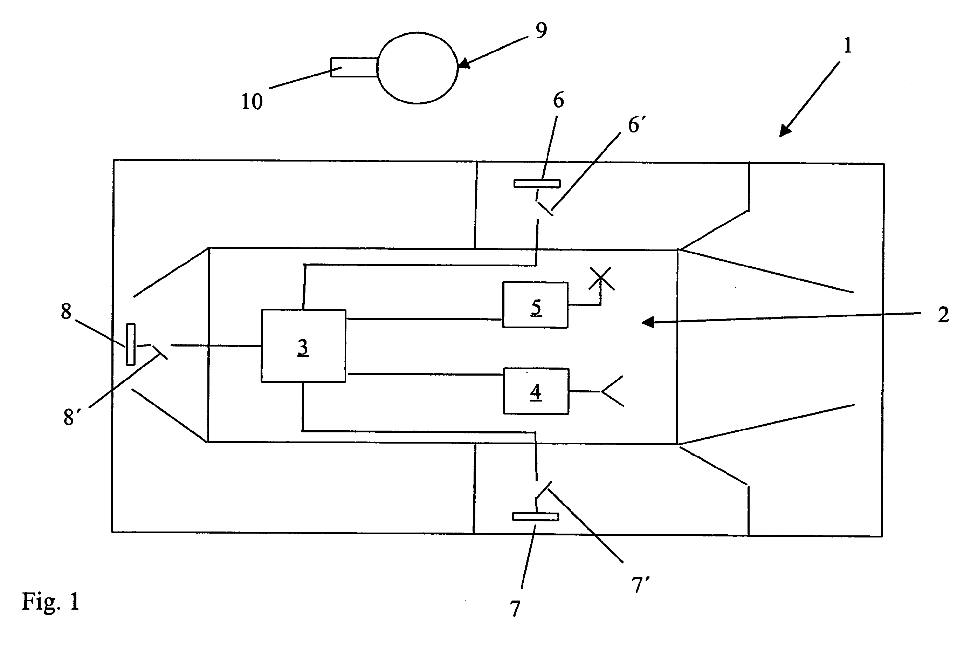

In Figur 1 ist schematisiert ein Kraftfahrzeug 1 dargestellt, welches mit einer schlüssellosen Zugangskontrolleinrichtung ausgestattet ist. Die Zugangskontrolleinrichtung besteht aus einer im Kraftfahrzeug 1 angeordneten Steuervorrichtung 3, an die eine Sende-Empfangseinrichtung 2 sowie über entsprechende Leitungen die mit den Türgriffen 6,7,8 kooperierenden elektrischen Schalter 6',7',8' angeschlossen sind. Die Sende- und Empfangseinrichtung 2 umfaßt zumindest einen Sender 4 sowie einen Empfänger 5 zum Durchführen eines Frage-Antwort-Dialogs mit einem mobilen Transponder 9. Der Transponder 9 umfaßt ebenfalls einen Sender und einen Empfänger, sowie einen eines Mikroprozessor zur Abwicklung der mit dem Frage-Antwort-Dialog verbundenen Prozesse.
Zur Spannungsversorgung enthält der Transponder 9 eine nicht näher dargestellte, wiederaufladbare Batterie, beispielsweise eine Lithium-lonen Batterie.

Eine schlüssellose Zugangsberechtigungskontrolle gemäß der in Figur 1 dargestellten Zugangskontrolleinrichtung funktioniert wie folgt:

Der Sender 4 sendet ein codiertes Signal aus, das von dem sich dem Kraftfahrzeug 1 nähernden Transponder 9, den eine berechtigte Person beispielsweise in der Jackentasche trägt, empfangen wird und das zum "Wecken" des Transponders 9 dient.
Der Transponder 9 erkennt das Codesignal und sendet ein codiertes Antwortsignal aus.

Gleichzeitig mit dem zyklischen Aussenden des Codesignals wird die im Kraftfahrzeug 1 angeordnete Sende-Empfangseinrichtung 2 gestartet. Das vom Transponder 9 ausgesandte, codierte Antwortsignal wird von der Sende-Empfangseinrichtung 2 im Kraftfahrzeug 1 empfangen. Der empfangene Code wird überprüft und bei einem positiven Resultat dieser Überprüfung werden durch die Steuervorrichtung 3 die elektrischen Schalter 6', 7', 8' sowie die mit diesen kooperierenden Türgriffe 6, 7, 8 freigegeben. Diese Freigabe erfolgt dadurch, daß die Türgriffe 6, 7, 8 durch das Zurückfahren diese bis dahin verbergender Abdeckungen dem Benutzer zugänglich gemacht werden.

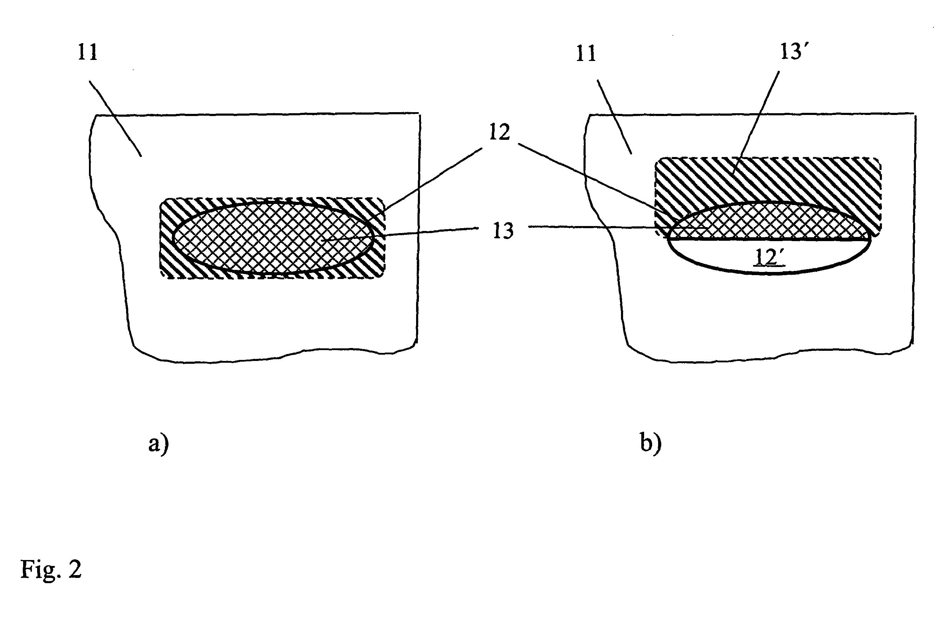

In Fig. 2 ist eine mögliche Ausführungsform für diese Abdeckung dargestellt: Das äußere Türblech 11 weist dabei eine Griffmulde 12 auf, die zunächst, wie in Situation a) gezeigt, vollständig durch das Griffelement 13 verdeckt ist, so das dasselbe nicht von Hand zu bewegen ist. Bei erfolgter Freigabe wird durch einen Elektromotor das Griffelement 13 nach oben bewegt, so daß sich die in b) dargestellte Situation ergibt, bei der der vorher die Griffmulde 12 verdeckende Anteil 13' des Griffelements 13 teilweise hinter das Türblech 11 verschwindet, und bei der im Bereich 12' der Griffmulde nun ein Eingreifen mit der Hand möglich ist.
In dieser Stellung ist dann von Hand ein weiteres Anheben des Griffelements 13 möglich, wodurch der diesem zugeordnete elektrische Schalter betätigt wird.
Durch die Betätigung des Schalters wird der bidirektionale Frage-Antwort-Dialog zwischen der Sende-Empfangseinrichtung 2 im Kraftfahrzeug und derjenigen des Transponders 9 in Gang gesetzt, welcher das Vorliegen der Zugangsberechtigung überprüft. Dabei wird das von der Sende-Empfangseinrichtung 2 empfangene Antwortsignal des Transponders 9 entschlüsselt und mit einem Sollwert oder mit mehreren Sollwerten verglichen, woraufhin die Zugangsberechtigung der den Transponder tragenden Person festgestellt wird. Bei Empfang eines gültigen Antwort-Code-Signales erfolgt durch die Steuervorrichtung 3 ein in diesem Ausführungsbeispiel an die Fahrzeugtür, deren Griff betätigt wurde, gerichtetes Auslösesignal zum Entriegeln derselben.

In dem Kraftfahrzeug 1 ist an geeigneter Stelle eine Transponderaufnahme angeordnet, in die der Transponder 9 mit seiner Ferritkernantenne 10 einsetzbar ist. Dieser Transponderaufnahme ist eine induktive Ladeeinrichtung zugeordnet, so daß die wiederaufladbare Batterie des Transponders 9 beim Benutzen des Kraftfahrzeugs 1 aufgeladen wird. Der Transponderaufnahme ist darüber hinaus eine weitere Einrichtung zum Durchführen von Frage-Antwort-Dialogen zugeordnet, die entsprechend dem oben beschriebenen Frage-Antwort-Dialog ablaufen, jedoch mit dem Ziel, nunmehr eine Wegfahrsperre auszuschalten und/oder andere Sicherheits- oder Betriebszustände abzufragen bzw. zu starten.

## Patentansprüche

1. Schlüssellose Zugangskontrolleinrichtung für Kraftfahrzeuge mit einer dem Kraftfahrzeug (1) zugeordneten Sende-Empfangseinrichtung (2) und mit einem mobilen Transponder (9), wobei die Sende-Empfangseinrichtung (2) und der Transponder (9) untereinander Codesignale zur Durchführung eines die Zugangsberechtigung überprüfenden, bidirektionalen Frage-Antwort-Dialogs austauschen, und wobei eine Steuervorrichtung (3) vorhanden ist, die mit zumindest einem durch zumindest ein dem Kraftfahrzeug (1) zugeordnetes Bedienelement (6,7,8) beeinflußten, elektrischen Schalter (6',7',8') kooperiert, **dadurch gekennzeichnet, daß** das zumindest eine Bedienelement (6,7,8) bis zum Empfang einer ersten, eine Grobidentifikation des berechtigten Benutzers beinhaltenden Codenachricht durch eine bewegliche, mechanische Abdeckung gegen Betätigung geschützt ist, und daß der die Zugangsberechtigung überprüfende, bidirektionale Frage-Antwort-Dialog durch Betätigung des freigegebenen Bedienelements (6,7,8) ausgelöst ist.

2. Zugangskontrolleinrichtung nach Anspruch 1, **dadurch gekennzeichnet, daß** das zumindest eine Bedienelement (6,7,8) durch einen Türgriff des Kraftfahrzeugs gebildet ist.

3. Zugangskontrolleinrichtung nach Anspruch 2, **dadurch gekennzeichnet, daß** die mechanische Abdeckung durch das Griffelement (13) des Türgriffs selbst gebildet ist, wobei dieses in eine Position gebracht ist, in der keine Betätigung desselben möglich ist.

4. Zugangskontrolleinrichtung nach einem der Ansprüche 1 bis 3, **dadurch gekennzeichnet, daß** zum Öffnen und Schließen der mechanischen Abdeckung des zumindest einen Bedienelements (6,7,8) elektromotorische Antriebsmittel eingesetzt sind.

5. Zugangskontrolleinrichtung nach einem der Ansprüche 1 bis 4, **dadurch gekennzeichnet, daß** die dem Kraftfahrzeug (1) zugeordnete Sende-Empfangseinrichtung (2) zumindest einen im induktiven Frequenzbereich arbeitenden Sender (NF-Sender) zum Aussenden eines niederfrequenten Codesignals (NF-Signal) und eine im Hochfrequenzbereich (HF-Bereich) arbeitende Sende-Empfangseinheit umfaßt und daß der mobile Transponder (9) einen Empfänger zum Empfangen eines NF-Signals und eine HF-Sende-Empfangseinheit umfaßt.

6. Zugangskontrolleinrichtung nach Anspruch 5, **dadurch gekennzeichnet, daß** die HF-Sende-Empfangseinheiten zur Durchführung des die Zugangsberechtigung überprüfenden bidirektionalen Frage-Antwort - Dialogs vorgesehen sind.

## Claims

1. Keyless access control device for motor vehicles with a transceiver (2) assigned to the motor vehicle (1) and with a mobile transponder (9), wherein the transceiver (2) and the transponder (9) exchange code signals for the purpose of conducting a bidirectional interrogation dialogue for the purpose of verifying the access authorisation, and wherein a control unit (3) is provided which cooperates with at least one electric switch (6', 7', 8') influenced by at least one control element (6, 7, 8) assigned to the motor vehicle (1), **characterised by** the fact that the at least one control element (6, 7, 8) is protected against actuation by a moveable mechanical covering until an initial code message is received containing a coarse identification of the authorised user, and that the bidirectional interrogation dialogue verifying the access authorisation is triggered by actuating the released control element (6, 7, 8).

2. Access control device in accordance with Claim 1, **characterised by** the fact that the at least one control element (6, 7, 8) comprises a door handle of the motor vehicle.

3. Access control device in accordance with Claim 2, **characterised by** the fact that the mechanical covering is formed by the handle element (13) itself, with the same having been brought into a position in which no actuation of the same is possible.

4. Access control device in accordance with any of Claims 1 to 3, **characterised by** the fact that electromotive driving means are utilised for opening and closing the mechanical covering of the at least one control element (6, 7, 8).

5. Access control device in accordance with any of Claims 1 to 4, **characterised by** the fact that the transceiver (2) assigned to the motor vehicle (1) comprises at least one transmitter (LF transmitter) functioning in the inductive frequency range for emitting a low-frequency code signal (LF signal) and a transceiver unit functioning in the high-frequency range (HF range) and that the mobile transponder (9) comprises a receiver for receiving an LF signal as well as an HF transceiver unit.

6. Access control device in accordance with Claim 5, **characterised by** the fact that the HF transceiver units are provided for conducting the bidirectional interrogation dialogue for verifying the access authorisation.

## Revendications

1. Système de contrôle d'accès sans clé pour véhicules automobiles, avec un système émetteur-récepteur (2) associé au véhicule automobile (1), et avec un transpondeur (9) mobile, le système émetteur-récepteur (2) et le transpondeur (9) échangeant entre eux des signaux codés pour la réalisation d'un dialogue interrogation-réponse bidirectionnel, vérifiant l'autorisation d'accès, et un dispositif de commande (3) étant prévu, lequel coopère avec au moins un commutateur électrique (6', 7', 8') soumis à l'influence d'au moins un élément d'actionnement (6, 7, 8) associé au véhicule automobile 1, **caractérisé en ce que** l'élément d'actionnement (6, 7, 8) est protégé contre tout actionnement par une protection mécanique mobile, jusqu'à la réception d'un message codé contenant une identification grossière de l'utilisateur autorisé, et **en ce que** le dialogue interrogation-réponse bidirectionnel, qui vérifie l'autorisation d'accès, est déclenché par actionnement de l'élément d'actionnement (6, 7, 8) libéré.

2. Système de contrôle d'accès selon la revendication 1, **caractérisé en ce que** l'élément d'actionnement (6, 7, 8) au moins prévu est formé par une poignée de portière du véhicule automobile.

3. Système de contrôle d'accès selon la revendication 2, **caractérisé en ce que** la protection mécanique est formée par l'élément de préhension (13) de la poignée de la portière lui-même, celui-ci étant amené dans une position dans laquelle aucun actionnement de celui-ci n'est possible.

4. Système de contrôle d'accès selon l'une des revendications 1 à 3, **caractérisé en ce que**, pour l'ouverture et la fermeture de la protection mécanique de l'élément d'actionnement (6, 7, 8) au moins prévu, des moyens d'entraînement électromoteurs sont mis en oeuvre.

5. Système de contrôle d'accès selon l'une des revendications 1 à 4, **caractérisé en ce que** le système émetteur-récepteur (2) associé au véhicule automobile (1) comprend au moins un émetteur (émetteur BF) fonctionnant dans une gamme de fréquences inductives pour l'émission d'un signal codé basse fréquence (Signal BF) et une unité émettrice-réceptrice fonctionnant dans une gamme de hautes fréquences (Gamme HF), et **en ce que** le transpondeur mobile 9 comprend un récepteur pour la réception d'un signal BF et une unité émettrice-réceptrice HF.

6. Système de contrôle d'accès selon la revendication 5, **caractérisé en ce que** les unités émettrices-réceptrices HF sont prévues pour la réalisation du dialogue interrogation-réponse bidirectionnel qui contrôle l'autorisation d'accès.
